# EUROPEAN PATENT SPECIFICATION

(11) **EP 1 312 087 B1**
(45) Date of publication and mention of the grant of the patent: **03.10.2007**
(21) Application number: 01969564.2
(22) Date of filing: 02.08.2001
(51) Int. Cl.: G11B 20/00, G06F 1/00

(54) **METHOD AND DEVICE FOR CONTROLLING DISTRIBUTION AND USE OF DIGITAL WORKS**
VERFAHREN UND GERÄT ZUM KONTROLIEREN DES VERTEILENS UND DER BENUTZUNG VON DIGITALWERKEN
PROCEDE ET DISPOSITIF DE CONTROLE DE LA REPARTITION ET L'UTILISATION DE TRAVAUX NUMERIQUES

(30) Priority: 16.08.2000 EP 00202888
(43) Date of publication of application: 21.05.2003
(60) Divisional application: 07113366.4
(73) Proprietor: UQE, LLC, Novato CA 94945-3413 (US)
(72) Inventor: TREFFERS, Menno, A., NL-5656 AA Eindhoven (NL); STARING, Antonius, A., M., NL-5656 AA Eindhoven (NL)
(74) Representative: van Loon, C.J.J.
(86) International application number: PCT/EP2001/008924
(87) International publication number: WO 2002/015184

(56) References cited:
- EP-A- 1 005 040
- EP-A- 1 020 856
- WO-A-00/08909
- WO-A-00/55861
- WO-A-01/33317

## Description

The present invention relates to a method and device for controlling distribution and use of a digital work. Furthermore, the present invention relates to a record carrier for storing the digital work.

A fundamental issue facing the publishing and information industries as they consider electronic publishing is how to prevent unauthorised and unaccounted distribution of usage of electronically published materials. Electronically published materials are typically distributed in a digital form and created on a computer-based system having the capability to recreate the materials. Audio and video recordings, software, books and multimedia works are all being electronically published. Royalties are paid for each accounted for delivery, such that any unaccounted distribution results in an unpaid royalty.

The transmission of digital works over networks such as the widely used Internet is nowadays usual practice. The Internet is a widespread network facility by which computer users in many universities, corporations and government entities communicate and trade ideas and information. Thus, it would be desirable to utilise such networks for distribution of digital works without the fear of wide-spread unauthorized copying.

The apparent conversions between consumer appliances and computers, increasing network and modem speeds, the declining costs of computer power and bandwidths, and the increasing capacity of optical media will combine to create a world of hybrid business models in which digital contents of all kinds may be distributed on optical media played on at least occasionally connected appliances and/or computers, in which the one-time purchase models common in music CDs and initial DVD (digital video disc) movie offerings are augmented by other models, for example, lease, pay-per-view, and rent to own, to name just a few. Consumers may be offered a choice among these and other models from the same or different distributers and/or other providers. Payment for use may happen over a network and/or other communication channels to some payment settlement service. Consumer usage and ordered information may flow back to creators, distributers, and/or other participants. The elementary copy protection technologies for recordable optical discs now being introduced cannot support these and other sophisticated models.

Document US-A 5 629 980 discloses a method and device for controlling distribution and use of a digital work as define in the preamble of claims 1 and 13, wherein a digital or usage right is acquired together with the purchase. This usage right limits how a music track purchased on Internet, downloaded, and stored in scrambled form on a recordable optical disc can be used. These digital rights are also called usage rules or usage rights. For example, the buyer may be allowed to make three copies for a personal use, a fourth copy will be refused. Alternatively, the buyer may be allowed to play a specific track four times, whereas the optical disc drive will not play a fifth time.

The usage rights are stored preferably on the optical disc. In this case, the usage rights travel together with the music and the disc will play on all disc players that support this feature.

An Electronic Music Download (EMD) application used to download the music track from the Internet has to store several pieces of information on the disc, e. g. the scrambled audio track, the key needed to descramble the audio track, and a description of the usage rights. Some of the usage rights can be decreased (i. e. consumed) when they are used. The rule "three copies for personal use", for instance, becomes "two copies for personal use" after one copy has been made. The usage rights therefore contains counters that can be updated when a usage right has been exercised.

Any equipment which is arranged to access the downloaded track should comply with the rules underlying the purchased usage rights. That is, only authorised, trusted, playback equipment should be able to read the key, and set the usage rights or counters. Therefore, a non-compliant application which may copy tracks without updating the counter, increment counters without paying additional fees, or make an identical copy of the disk with the same usage rights should be prevented.

As regards a bit-by-bit copy operation using a standard disc drive, a Unit Disc Identifier (UDI) has been suggested, which may be written by the disc manufacturer on the disc in a way that can be read by the playback equipment, but cannot be modified. If a recordable disc has a UDI, this identifier can be combined with or incorporated in a scrambling key of the audio track. A bit-by-bit copy of the concerned disc onto another record carrier cannot be descrambled anymore, since the other record carrier will have a different UDI, such that the scrambling key cannot be recovered anymore.

However, a "copy and restore attack" or "replay attack" may be used to circumvent the above UDI solution. In this case, a standard disc drive is used to determine those bits which have been changed on the disk when a usage right is consumed. These bits typically relate to the counters of the usage rights and are therefore copied to another storage medium. Then, the usage right is consumed, e. g. by making copies, until a copy-counter has reached zero and no further copies are allowed. The determined and stored bits are restored from the storage medium back onto the disc. Now, the disc is in a state which pretends that the usage rights have not been consumed or exercised, such that the user may continue making copies. In this case, the UDI-dependent scrambling key has no influence on the copy operation, since the disc has not been changed.

Furthermore, document WO-A-97/43761 discloses a rights management arrangement for storage media such as optical digital video discs, wherein a secure "software container" is used to protectively encapsulate a digital work and corresponding usage right information. Furthermore, an encrypted key block is stored on the disc, which provides one or more cryptographic keys for use in decrypting the digital work. The decryption keys for decrypting the key block are also stored on the record carrier in the form of a hidden information, stored in a location which can be physically enabled by a corresponding firmware or jumper of the disc drive, such that it maybe accessible for disc players but not for personal computers. Thus, any attempt to physically copy the disc by a personal computer would result in a failure to copy the hidden keys.

However, even this cryptographic protection method may not prevent a successful "copy and restore attack", since a potential hacker restores the detected and copied usage right data back to their original location on the same disc. Then, the hacker may play again the track for which the usage rights have been exercised, without paying again. It is noticed that the hacker does not have to read or write the hidden keys to circumvent the protection mechanism. Thus, the "copy and restore attack" is useful for rights that are consumed, such as a right to play once, a right to make a limited number of copies (where a copy counter on the disk is incremented after each copy), or a right to move a track from one disc to another (where the track on the original disc is deleted).

It is therefore an object of the present invention to provide a method and device for controlling distribution and use of a digital work based on an attached usage right information, and a corresponding record carrier, by means of which a circumvention of the usage rights by a "copy and restore attack" can be prevented.

This object is achieved by a method as defined in claim 1, by a record carrier as defined in claim 11, and by a device as defined in claim 13.

Accordingly, the usage right information is re-written and a new hidden information used for encrypting or verifying the usage right information is stored, when the usage right information has changed. Thus, a simple restoring operation of the usage right information in the course of a "copy and restore attack" merely restores the previous usage right information but does not restore the previous hidden information. However, due to the fact that the changed hidden information no longer fits or corresponds to the previous or original usage right information, a decryption or a verification of the usage right information is no longer possible, such that the protection system of the disc player will recognise the attempt of fraud. A "copy and restore attack" of the hidden channel will not work, since non-compliant devices are not capable of reading or writing on the hidden channel.

According to an advantageous development, the hidden information may be a checksum over a data block containing the usage right information. In this case, the usage right information does not have to be encrypted on the record carrier. Any manipulation of the content of the usage right information can be prevented by calculating the checksum and storing this checksum in the hidden channel. A "copy and restore" attack does not work, since the hidden checksum which has been changed with the update of the usage right information will no longer be valid for the restored original usage right information.

Alternatively, according to another advantageous development, the hidden information may be a key used for a decrypting the usage right information, wherein the key is randomly changed and the usage right information is re-encrypted by using the changed key, when the usage right information has changed. The restoring of the old version of the usage right information will not work, since the changed key cannot be used for decrypting the original usage right information.

Preferably, the previous key is destroyed after the change of the key. Thereby, the key used for encrypting the original usage right information can no longer be retrieved and a potential hacker cannot decrypt the original usage right information.

Preferably, the hidden channel may be generated by:
storing the hidden information in deliberate errors which can be corrected again;
storing the hidden information in merging bits of a runlength-limited code;
controlling a polarity of a predetermined runlength of a predetermined word of a runlength-limited code, according to the hidden information;
storing the hidden information in deliberate errors in a time-base; or
storing the hidden information in a memory embedded with a disc controller. Thereby, a hidden channel can be provided which cannot be read or written by existing or conventional disc drives. Even by a firmware update, they may not be able to read or write the hidden channel. In particular, a modification of the respective integrated circuits is required for copying or reading the hidden channel. This, however, is expensive and requires corresponding expert knowledge. The known lead-in areas of record carriers are not sufficient to provide such a hidden channel, since the conventional disc drives may give access to these areas by simple firmware hacking operation.

According to a further advantageous modification, the attached usage right information may be stored in a table together with a key information used for decrypting the digital work. Thus, the key information required for decrypting the digital work can no longer be decrypted after a "copy and restore attack". The digital work may be an audio track downloaded from the Internet to a recordable optical disc.

Preferably, the usage right information comprises a counter information which can be updated when the usage right has been exercised. Thus, the change of the counter information leads to a re-writing and re-encrypting operation with a new hidden key, such that a detection and restoring of the updated counter values is useless due to the changed hidden decryption key.

According to a further advantageous modification, each track of the recording medium may comprise its on usage right information and hidden information. In this case, a hidden key is provided for each track of the record carrier, as long as the hidden channel provides enough capacity.

In the following, the present invention will be described in greater detail based on a preferred embodiment with reference to the accompanying drawings, of which:
Fig. 1 shows a modification of a key-locker table and a hidden key after a copy operation, according to the preferred embodiment of the present invention,
Fig. 2 shows a basic block diagram of a driving device for driving a record carrier according to the preferred embodiment of the present invention, and
Fig. 3 shows a basic flow diagram of a secure update of a usage right information, according to the preferred embodiment of the present invention.

The preferred embodiment will now be described on the basis of an EMD from the Internet onto a record carrier such as a recordable optical disc, where a music track is purchased, downloaded and stored on the record carrier.

Nevertheless, in the present application, the term "digital work", refers to any work that has been reduced to a digital representation. This includes any audio, video, text or multimedia work and any accompanying interpreter (e. g. software) that may be required for recreating the work. The term "usage rights" refers to any rights granted to a recipient of a digital work. Generally, these rights define how a digital work can be used and if it can be further distributed. Each usage right may have one or more specified conditions which must be satisfied for the right to be exercised. The usage rights are permanently "attached" to the digital work. Copies made of a digital work will also have usage rights attached. Thus, the usage rights and any associated fees assigned by a creator and subsequent distributer will always remain with a digital work.

According to the preferred embodiment, all secrets, e. g. usage rights, keys, counters, an own identification of the disc or any information which is to be stored in a tamper-free way, are stored together in a table which is called a key-locker table KLT. The key-locker table KLT is encrypted e. g. by a DES algorithm and stored on the disc in any convenient location. The key used for encrypting the key-locker KLT is called the key-locker key KLK. This key KLK is stored on the disk in a special hidden channel or secure side channel which cannot be read or written by existing or conventional disc drives. In particular, the hidden channel must be arranged such that a firmware update of existing disc drives is not sufficient to enable a reading or writing operation of the hidden channel.

The hidden channel must be hidden very deeply in the physical characteristics of the recorded data stream, record carrier or disc drive, such that a change of the integrated circuits is required to read or write to the hidden channel with existing disc drives. Some possibilities for implementing such a hidden channel are:
(i) storing the hidden information (key) in deliberate errors of the data stream, which can be corrected again;
(ii) storing the hidden information in merging bits of a runlength-limited code sequence;
(iii) storing the hidden information by controlling the polarity of a predetermined runlength of a predetermined data or control symbol of a runlength-limited code sequence, according to the hidden information; or
(iv) storing the hidden information in deliberate errors in the time-base of the data stream.

However, any other hidden channel suitable to prevent a reading or writing of the hidden information with existing disc drives can be implemented.

The key-locker table KLT is re-written each time its content is changed, e. g. when the usage right is consumed. Then, a new random key-locker key KLK is used each time the key-locker table KLT is re-written.

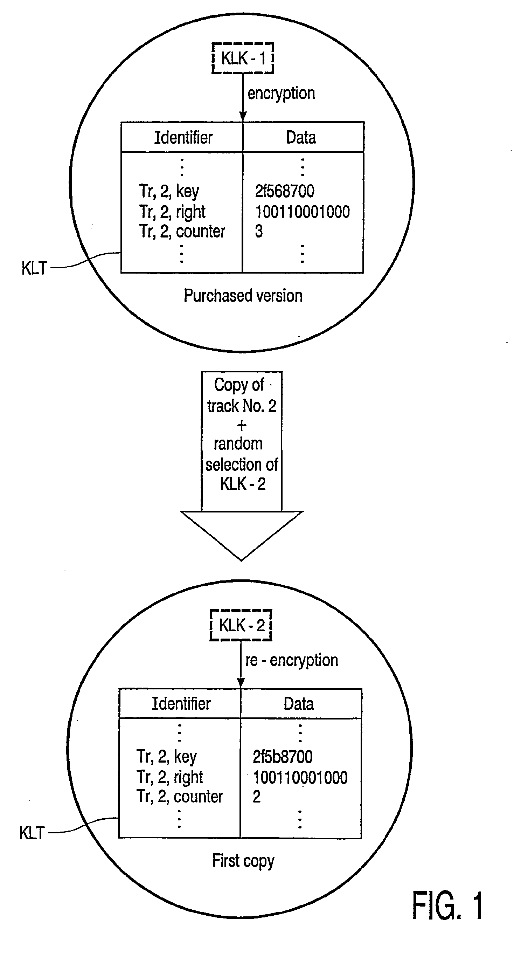

Fig. 1 shows a purchased version of the key-locker table KLT written on a recordable optical disc, which is encrypted by a first key-locker key KLK-1 stored in a hidden channel of the optical disc, e. g. as indicated above. In the example shown in Fig. 1, the user has purchased a right to make three copies of track No. 2. In the key-locker table KLT shown in Fig. 1, only the content relevant to track No. 2 is shown, wherein the table comprises an identifier portion and a data portion and wherein the identifier portion includes an information used for identifying the respective data in the data portion. In particular, a key (indicated in hexa decimal notation) is followed by a track No. 2 usage right for track No. 2 (indicated in binary notation) and by a counter value of track No. 2, which is set to "3" in line with the purchased usage right.

After the copy operation of track No. 2, a new key-locker-key KLK-2 is randomly selected by the disc drive, used for re-encrypting the updated key-locker table KLT, and stored in the hidden channel. Thus, as indicated in the lower part of Fig. 1, after the first copy of track two, the key-locker table KLT has been re-encrypted by the new key-locker key KLK-2 and updated by decreasing the counter value in the key-locker table KLT to "2".

Accordingly, an extraction and intermediate storage of the original or purchased key-locker table KLT, followed by a re-storing after the first copy operation is useless, since the new key-locker key KLK-2 is now stored in the hidden channel and a decryption of the key-locker table KLT would now no longer be possible by the disc drive. Accordingly, any "copy and restore attack" is readily detected by the disc drive or at least leads to an error.

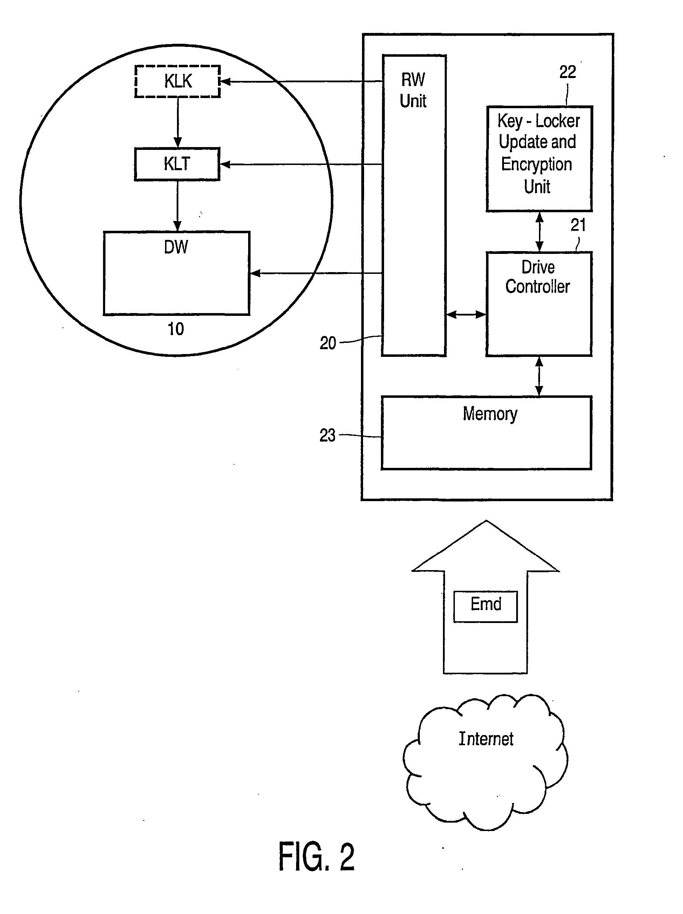

Fig. 2 shows a basic block diagram of a disc drive according to the preferred embodiment of the present invention, which is arranged to generate and write a key-locker table KLT together with a digital work DW (i. e. a music track or the like) on a recordable disc 10 based on usage right acquired together with a purchase from the Internet. In particular, an EMD application which may run on a computer system to provide a corresponding download function stores the purchased scrambled digital work together with the key required for descrambling the digital work, and a description of the usage rights in a memory 23 of the disc drive. As an alternative, the purchased pieces of information may be stored in a memory of the computer system from which they are read by a drive controller 21 of the disc drive.

The drive controller 21 reads the purchased pieces of information from the memory 23 and supplies the key and the usage rights to a key-locker update and encryption unit 22 which is arranged to generate a corresponding key-locker table KLT and to randomly select a key-locker key KLK used for encrypting the key-locker table KLT. The drive controller 21 receives the generated key-locker table KLT and key-locker key KLK and controls a reading and writing (RW) unit 20 so as to write the purchased digital work DW (i. e. music track) and the key-locker table KLT at predetermined positions on the recordable disc 10. Furthermore, the drive controller 21 controls the RW unit 20 so as to store the key-locker key KLK in a hidden channel of the recordable disc 10, which is not accessible by conventional disc drives or disc players. With every change of the purchased usage right due to a consumption (i. e. copy or play operation), the drive controller 21 supplies a corresponding control signal to the key-locker update and encryption unit 22 which updates the key-locker table KLT correspondingly, generates a new randomly selected key-locker key KLK, and encrypts the key-locker table KLT using the new key-locker key KLT. The drive controller 21 receives the updated and scrambled key-locker table KLT and the new key-locker key KLK and controls the RW unit 20 so as to write the re-scrambled key-locker table KLT onto the recordable disc 10 and the new key-locker key KLK in the hidden channel. This updating and re-encryption by using a new key-locker key KLK is thus performed after each change inside the key-locker table KLT.

If the updated key-locker table KLT indicates that the usage rights have been exercised or consumed, the disk controller 21 refuses the use of the respective digital work, e. g. by transmitting a corresponding error message or control signal to the EMD application.

It is to be noted that the key-locker update and encryption unit 22 may be implemented as a software routine of the drive controller 21.

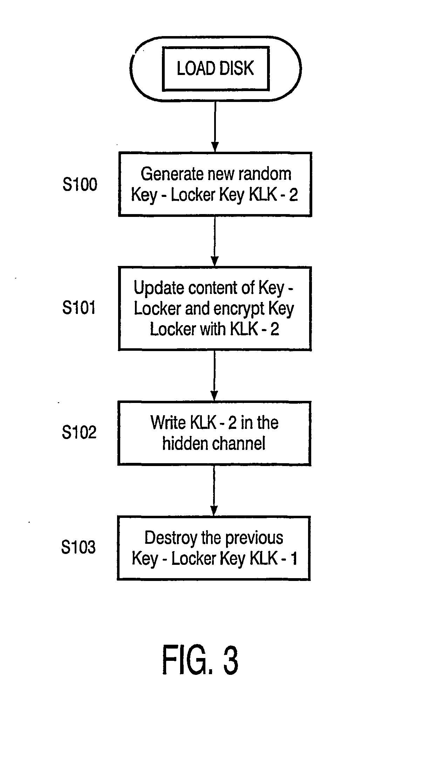

Fig. 3 shows a basic flow diagram of the above procedure for a secure update of the usage rights. According to Fig. 3 a new random key-locker key KLK-2 is generated in step S 100 after the recordable disc has been loaded into the disc drive and a corresponding usage operation of the digital work has been started. Then, the content of the key-locker table KLT is updated and encrypted with the new key-locker key KLK-2 by the key-locker update and encryption unit 22 (step S101). Thereafter, the new key-locker-key KLK-2 is written by the RW unit 20 in the hidden channel HC of the recordable disc 10 (step S 102). This step may be followed by the optional steps of verifying that the new key-locker key KLK-2 and the re-encrypted key-locker table KLT have been written correctly on the recordable disc 10. Finally, the previous key-locker key KLK-1 may be destroyed by the RW unit 20 (step S 103).

According to an alternative modification of the preferred embodiment, the key-locker update and encryption unit 22 may be replaced by a key locker update and verification unit arranged to calculate a checksum over the content of the key-locker table KLT and to store this checksum in the hidden channel HC (instead of the key-locker key KLK). In this case, the key-locker table KLT even does not need to be encrypted. Any manipulation of the content of the key-locker table KLT can be verified by the key-locker update and verification unit by a checking operation using the hidden checksum. Any change of the key-locker table KLT resulting from a consumption or exercise of the purchased usage rights leads to a changed checksum which is written in the hidden channel HC. Thus, the "copy and restore attack" will lead to a mismatch between the actual checksum of the restored key-locker table KLT and the hidden check sum. This mismatch will be detected by the key-locker update and verification unit, such that an error processing or protection mechanism may be started.

Thus, the present invention provides the advantage that a "copy and restore attack" leads to a mismatch between the hidden key-locker key KLK or the alternative hidden checksum and the restored key-locker table KLT. This mismatch either prevents a descrambling of the key-locker table KLT or leads to an error in the verification processing. Thus, the fraud attack can be detected at the disc drive.

In another embodiment, the hidden channel comprises random data which is used for calculating a checksum over the content of the key-locker table KLT and which checksum is stored in the user data, therefore freely accessible, both for compliant and non-compliant devices. If it is ascertained that the content of the hidden channel can not be deterministically changed by a non-compliant device, the content of the hidden channel may be freely accessible A compliant device can calculate the checksum by reading the random data in the hidden channel an check whether the calculated checksum corresponds to checksum present in the user data. A calculated checksum which differs from the checksum present in the user data indicates that the content of the hidden channel might be tampered with.

It is noted that the present invention is not restricted to the above embodiments, but can be applied to any recording or writing applications which should be protected against "copy and restore attacks". The EMD may be performed by a free distribution of the scrambled digital work DW on a pressed disc or via a broadcast channel. The key however, is then not distributed together with the content of the digital work. It can be purchased via the Internet. In such a case, a download of the compressed digital work is not necessary, only the keys have to be downloaded. Thereby, the network load and transmission costs can be decreased.

Furthermore, the key-locker table KLT may be arranged as one key-locker table per track. In this case, enough capacity of the hidden channel is required to store a random key-locker key KLK for each key-locker table KLT. The key-locker table KLT could be split into a plurality of key-locker tables if its size becomes too big to perform a re-writing operation at each transaction. Then, each key-locker table KLT will have its own random key-locker key KLK stored in the hidden channel.

The present invention may as well be applied to protect hard discs against "copy and restore attacks". In this case, the hidden channel could be arranged as a memory embedded within the HDD controller. A similar application is possible for flash memory cards or the like. Generally, the present invention can be applied to protect any further recording medium, e.g. magneto-optic recording medium (minidisc) or magnetic tape.

## Claims

1. A method for controlling distribution and use of a digital work (DW), comprising the steps of:
a) attaching a usage right information to said digital work (DW), said usage right information defining one or more conditions which must be satisfied in order for said usage right tc be exercised;
b) storing said digital work (DW) and its attached usage right information on a record carrier (10);
c) updating said attached usage right information with every use of said digital work (DW); and
d) refusing the use of said digital work if said usage right information indicates that the usage right has been exercised;
**characterized in that**
e) a hidden information (KLK) stored in a hidden channel and used for encrypting or verifying said usage right information is changed when said usage right information has changed.

2. A method according to claim 1, **characterized in that** said hidden information is a checksum over a data block containing said usage right information.

3. A method according to claim 1, **characterized in that** said hidden information is a key (KLK) used for decrypting said usage right information, wherein said key is randomly changed and said usage right information is re-encrypted by using said changed key, when said usage right information has changed.

4. A method according to claim 3, **characterized in that** the previous key (KLK-1) is destroyed after the change of said key.

5. A method according to any of claims 1 to 3, **characterized in that** said hidden channel is arranged to be not accessible by commercial reproducing devices.

6. A method according to claim 5, **characterized in that** said hidden channel is generated by:
- storing said hidden information (KLK) in deliberate errors which can be corrected again;
- storing said hidden information (KLK) in merging bits of a runlength-limited code;
- controlling a polarity of predetermined runlength of a predetermined word of a runlength-limited code according to said hidden information (KLK);
- storing said hidden information (KLK) in deliberate errors in a time-base; or
- storing said hidden information (KLK) in a memory embedded with a disc controller.

7. A method according to any of claims 2 to 6, **characterized in that** said attached usage right information is stored in a table (KLT) together with a key information used for decrypting said digital work (DW).

8. A method according to any of claims 1 to 7, **characterized in that** said digital work (DW) is an audio track downloaded from the Internet, and said record carrier is a recordable optical disc, a hard disc, a magneto-optic recording device, a magnetic tape, or a memory card.

9. A method according to any of claims 1 to 8, **characterized in that** said usage right information comprises a counter information which can be updated when said usage right has been exercised.

10. A method according to any of claims 1 to 9, **characterized in that** each track of said recording medium (10) comprises its own usage right information and hidden information (KLK).

11. A record carrier storing a digital work (DW) and a usage right information defining one or more conditions which must be satisfied in order for the usage right to be exercised, **characterized in that** said recording carrier (10) comprises a hidden channel which is not accessible by commercial reproducing devices and in which a hidden information (KLK) is stored which is to be used for encrypting or verifying said usage right information and which is to be changed when said usage right information has changed.

12. A record carrier according to claim 11, **characterized in that** said record carrier is a recordable optical disc (10), in particular a CD or a DVD.

13. A device for controlling distribution and use of a digital work, comprising:
a) writing means (20) for writing said digital work (DW) and an attached usage right information defining one or more conditions which must be satisfied in order for the usage right to be exercised, on a record carrier (10);
b) updating means (22) for updating said attached usage right information with every use of said digital work; and
c) control means (21) for refusing the use of said digital work (DW) if said updated usage right information indicates that the usage right has been exercised
**characterized in that**
d) said updating means (22) is arranged to change a hidden information (KLK) stored in a hidden channel and used for encrypting or verifying said usage right information, when said usage right information has changed.

## Patentansprüche

1. Verfahren zum Steuern der Verteilung und Nutzung eines digitalen Werks (DW) mit folgenden Schritten-.
a) Anhängen einer Nutzungsrechtsinformation an das digitale Werk (DW), wobei die Nutzungsrechtsinformation eine oder mehrere Bedingungen definiert, die zum Ausüben des Nutzungsrechts erfüllt sein müssen;
b) Speichern des digitalen Werks (DW) und der an dieses angehängten Nutzungsrechtsinformation auf einem Aufzeichnungsträger (10);
c) Aktualisieren der angehängten Nutzungsrechtsinformation bei jeder Nutzung des digitalen Werks (DW); und
d) Verweigern der Nutzung des digitalen Werks, wenn die Nutzungsrechtsinformation anzeigt, dass das Nutzungsrecht ausgeübt worden ist;
**dadurch gekennzeichnet, dass**
e) eine in einem verborgenen Kanal gespeicherte und zum Verschlüsseln oder Verifizieren der Nutzungsrechtsinformation verwendete verborgene Information (KLK) verändert wird, wenn sich die Nutzungsrechtsinformation verändert hat.

2. Verfahren nach Anspruch 1, **dadurch gekennzeichnet, dass** die verborgene Information eine Prüfsumme über einen die Nutzungsrechtsinformation enthaltenden Datenblock ist.

3. Verfahren nach Anspruch 1, **dadurch gekennzeichnet, dass** die verborgene Information ein Schlüssel (KLK) zum Entschlüsseln der Nutzungsrechtsinformation ist, wobei der Schlüssel willkürlich verändert wird und die Nutzungsrechtsinformation unter Verwendung des veränderten Schlüssels erneut verschlüsselt wird, wenn sich die Nutzungsrechtsinformation verändert hat.

4. Verfahren nach Anspruch 3, **dadurch gekennzeichnet, dass** der vorhergehende Schlüssel (KLK-1) nach Veränderung des Schlüssels zerstört wird.

5. Verfahren nach einem der Ansprüche 1 bis 3, **dadurch gekennzeichnet, dass** der verborgene Kanal derart angeordnet ist, dass er für kommerzielle Wiedergabevorrichtungen nicht zugänglich ist.

6. Verfahren nach Anspruch 5, **dadurch gekennzeichnet, dass** der verborgene Kanal wie folgt erzeugt wird:
- Speichern der verborgenen Information (KLK) mit absichtlichen Fehlern, die wieder korrigierbar sind;
- Speichern der verborgenen Information (KLK) mit vermischten Bits eines lauflängenbegrenzten Codes;
- Steuern einer Polarität der vorbestimmten Lauflänge eines vorbestimmten Worts eines lauflängenbegrenzten Codes gemäß der verborgenen Information (KLK);
- Speichern der verborgenen Information (KLK) mit absichtlichen Fehlern in einer Zeitbasis; oder
- Speichern der verborgenen Information (KLK) in einem in einem Platten-Controller eingebetteten Speicher.

7. Verfahren nach einem der Ansprüche 2 bis 6, **dadurch gekennzeichnet, dass** die angehängte Nutzungsrechtsinformation zusammen mit einer zum Entschlüsseln des digitalen Werks (DW) verwendeten Schlüsselinformation in einer Tabelle (KLT) gespeichert wird.

8. Verfahren nach einem der Ansprüche 1 bis 7, **dadurch gekennzeichnet, dass** das digitale Werk (DW) eine aus dem Internet heruntergeladene Tonspur ist und der Aufzeichnungsträger eine beschreibbare optische Platte, eine Festplatte, eine magnetooptische Aufzeichnungsvorrichtung, ein Magnetband oder eine Speicherkarte ist.

9. Verfahren nach einem der Ansprüche 1 bis 8, **dadurch gekennzeichnet, dass** die Nutzungsrechtsinformation eine Zählinformation aufweist, die aktualisiert werden kann, wenn das Nutzungsrecht ausgeübt worden ist.

10. Verfahren nach einem der Ansprüche 1 bis 9, **dadurch gekennzeichnet, dass** jede Spur des Aufzeichnungsmediums (10) ihre eigene Nutzungsrechtsinformation und verborgene Information (KLK) aufweist.

11. Aufzeichnungsträger zum Speichern eines digitalen Werks (DW) und einer Nutzungsrechtsinformation, welche eine oder mehrere Bedingungen definiert, die zum Ausüben des Nutzungsrechts erfüllt sein müssen,
**dadurch gekennzeichnet, dass**
der Aufzeichnungsträger (10) einen verborgenen Kanal aufweist, der für kommerzielle Wiedergabevorrichtungen nicht zugänglich ist und in dem eine verborgene Information (KLK) gespeichert ist, die zum Verschlüsseln oder Verifizieren der Nutzungsrechtsinformation zu verwenden ist und die zu verändern ist, wenn sich die Nutzungsrechtsinformation verändert hat.

12. Aufzeichnungsträger nach Anspruch 11, **dadurch gekennzeichnet, dass** der Aufzeichnungsträger eine beschreibbare optische Platte (10), insbesondere eine CD oder eine DVD, ist.

13. Vorrichtung zum Steuern der Verteilung und Nutzung eines digitalen Werks, mit:
a) einer Schreibeinrichtung (20) zum Schreiben des digitalen Werks (DW) und einer angehängten Nutzungsrechtsinformation, welche eine oder mehrere Bedingungen definiert, die zum Ausüben des Nutzungsrechts erfüllt sein müssen, auf einem Aufzeichnungsträger (10);
b) einer Aktualisiereinrichtung (22) zum Aktualisieren der angehängten Nutzungsrechtsinformation bei jeder Nutzung des digitalen Werks; und
c) einer Steuereinrichtung (21) zum Verweigern der Nutzung des digitalen Werks (DW), wenn die aktualisierte Nutzungsrechtsinformation anzeigt, dass das Nutzungsrecht ausgeübt worden ist;
**dadurch gekennzeichnet, dass**
d) die Aktualisiereinrichtung (22) dazu vorgesehen ist, eine in einem verborgenen Kanal gespeicherte und zum Verschlüsseln oder Verifizieren der Nutzungsrechtsinformation verwendete verborgene Information (KLK) zu verändern, wenn sich die Nutzungsrechtsinformation verändert hat.

## Revendications

1. Procédé de commande de la distribution et de l'utilisation d'une oeuvre numérique (DW), comprenant les étapes consistant à :
a) rattacher des informations de droit d'utilisation à ladite oeuvre numérique (DW), lesdites informations de droit d'utilisation définissant une ou plusieurs conditions qui doivent être satisfaites de manière à ce que ledit droit d'utilisation soit exercé,
b) mémoriser ladite oeuvre numérique (DW) et ses informations de droit d'utilisation rattachées sur un support d'enregistrement (10),
(c) mettre à jour lesdites informations de droit d'utilisation rattachées à chaque utilisation de ladite oeuvre numérique (DW), et
d) refuser l'utilisation de ladite oeuvre numérique si lesdites informations de droit d'utilisation indiquent que le droit d'utilisation a été exercé,
**caractérisé en ce que**
e) des informations cachées (KLK) mémorisées dans un canal caché et utilisées pour crypter ou vérifier lesdites informations de droit d'utilisation sont modifiées lorsque lesdites informations de droit d'utilisation ont été modifiées.

2. Procédé selon la revendication 1, **caractérisé en ce que** lesdites informations cachées sont un total de contrôle sur un bloc de données contenant lesdites informations de droit d'utilisation.

3. Procédé selon la revendication 1, **caractérisé en ce que** lesdites informations cachées sont une clé (KLK) utilisée pour décrypter lesdites informations de droit d'utilisation, où ladite clé est modifiée de manière aléatoire et lesdites informations de droit d'utilisation sont à nouveau cryptées en utilisant ladite clé modifiée, lorsque lesdites informations de droit d'utilisation ont été modifiées.

4. Procédé selon la revendication 3, **caractérisé en ce que** la clé précédente (KLK-1) est détruite après la modification de ladite clé.

5. Procédé selon l'une quelconque des revendications 1 à 3, **caractérisé en ce que** ledit canal caché est conçu pour ne pas être accessible à des dispositifs de reproduction du commerce.

6. Procédé selon la revendication 5, **caractérisé en ce que** ledit canal caché est généré par :
- mémorisation desdites informations cachées (KLK) dans des erreurs délibérées qui peuvent être à nouveau corrigées,
- mémorisation desdites informations cachées (KLK) dans des bits intercalaires d'un code à longueur de plage limitée,
- commande d'une polarité d'une longueur de plage prédéterminée d'un mot prédéterminé d'un code à longueur de plage limitée conformément auxdites informations cachées (KLK),
- mémorisation desdites informations cachées (KLK) dans des erreurs délibérées dans une base temporelle, ou
- mémorisation desdites informations cachées (KLK) dans une mémoire intégrée dans un contrôleur de disque.

7. Procédé selon l'une quelconque des revendications 2 à 6, **caractérisé en ce que** lesdites informations de droit d'utilisation rattachées sont mémorisées dans une table (KLT) en même temps que des informations de clé utilisées pour décrypter ladite oeuvre numérique (DW).

8. Procédé selon l'une quelconque des revendications 1 à 7, **caractérisé en ce que** ladite oeuvre numérique (DW) est une piste audio qui est téléchargée depuis le système Internet, et ledit support d'enregistrement est un disque optique enregistrable, un disque dur, un dispositif d'enregistrement magnéto-optique, une bande magnétique ou une carte mémoire.

9. Procédé selon l'une quelconque des revendications 1 à 8, **caractérisé en ce que** lesdites informations de droit d'utilisation comprennent des informations de compteur qui peuvent être mises à jour lorsque ledit droit d'utilisation a été exercé.

10. Procédé selon l'une quelconque des revendications 1 à 9, **caractérisé en ce que** chaque piste dudit support d'enregistrement (10) comprend ses propres informations de droit d'utilisation et ses propres informations cachées (KLK).

11. Support d'enregistrement mémorisant une oeuvre numérique (DW) et des informations de droit d'utilisation définissant une ou plusieurs conditions qui doivent être satisfaites de manière à ce que le droit d'utilisation soit exercé, **caractérisé en ce que** ledit support d'enregistrement (10) comprend un canal caché qui n'est pas accessible à des dispositifs de reproduction du commerce et dans lequel des informations cachées (KLK) sont mémorisées, lesquelles doivent être utilisées pour crypter ou vérifier lesdites informations de droit d'utilisation et lesquelles doivent être modifiées lorsque lesdites informations de droit d'utilisation ont été modifiées.

12. Support d'enregistrement selon la revendication 11, **caractérisé en ce que** ledit support d'enregistrement est un disque optique enregistrable (10), en particulier un disque CD ou un disque DVD.

13. Dispositif destiné à commander la distribution et l'utilisation d'une oeuvre numérique, comprenant :
a) un moyen d'écriture (20) destiné à écrire ladite oeuvre numérique (DW) et des informations de droit d'utilisation rattachées définissant une ou plusieurs conditions qui doivent être satisfaites de manière à ce que le droit d'utilisation soit exercé, sur un support d'enregistrement (10),
b) un moyen de mise à jour (22) destiné à mettre à jour lesdites informations de droit d'utilisation rattachées à chaque utilisation de ladite oeuvre numérique, et
c) un moyen de commande (21) destiné à refuser l'utilisation de ladite oeuvre numérique (DW) si lesdites informations de droit d'utilisation mises à jour indiquent que le droit d'utilisation a été exercé,
**caractérisé en ce que**
d) ledit moyen de mise à jour (22) est conçu pour modifier des informations cachées (KLK) mémorisées dans un canal caché et utilisées pour crypter ou vérifier lesdites informations de droit d'utilisation, lorsque lesdites informations de droit d'utilisation ont été modifiées.
